(19) Europäisches Patentamt
European Patent Office
Office européen des brevets

(11) **EP 4 738 812 A1**

(12) **EUROPEAN PATENT APPLICATION**

(43) Date of publication:
**06.05.2026 Bulletin 2026/19**

(21) Application number: **25211869.0**

(22) Date of filing: **29.10.2025**

(51) International Patent Classification (IPC):
***H04N 9/31*** *(2006.01)*

(52) Cooperative Patent Classification (CPC):
**H04N 9/3185; H04N 9/3194**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.10.2024 CN 202411535126**

(71) Applicant: **Shenzhen Oceanwing Smart Innovations Technology Co., Ltd Shenzhen, Guangdong (CN)**

(72) Inventors:
• **LIU, Huachao**
  **Shenzhen (CN)**
• **LUO, Ming**
  **Shenzhen (CN)**
• **HUANG, Huajin**
  **Shenzhen (CN)**
• **CHEN, Yu**
  **Shenzhen (CN)**
• **LI, Xiao**
  **Shenzhen (CN)**

(74) Representative: **Steffens, Adrian Boehmert & Boehmert Anwaltspartnerschaft mbB Pettenkoferstraße 22 80336 München (DE)**

(54) **SCREEN PROJECTION METHOD AND DEVICE OF PROJECTOR, ELECTRONIC DEVICE AND STORAGE MEDIUM**

(57) Disclosed are a screen projection method and device of a projector, an electronic device, and a storage medium. The screen projection method includes: when the projector receives a projection instruction and projects a target screen through the projector, acquiring (101) projection scenario information of the projector in a current projection scenario, and acquiring a preset historical projection record; determining (102) target projection information matching the current projection scenario according to the acquired projection scenario information and historical projection record; and correcting (103) the target screen according to the target projection information, and projecting the corrected target screen through the projector, which can correct the projection screen of the projector efficiently and simply after the projection scenario of the projector is changed, thereby efficiently and accurately projecting a screen through the projector and improving user experience.

```
                                                                              ┌── 101
┌─────────────────────────────────────────────────────────────────────────────┐
│ When the projector receives a projection instruction and projects a target    │
│ screen through the projector, acquire projection scenario information of the   │
│ projector in a current projection scenario, and acquire a preset historical    │
│ projection record                                                              │
└─────────────────────────────────────────────────────────────────────────────┘
                                      │
                                      ▼                                       ┌── 102
┌─────────────────────────────────────────────────────────────────────────────┐
│ Determine a target projection information matching the current projection      │
│ scenario according to the acquired projection scenario information and the      │
│ historical projection record                                                   │
└─────────────────────────────────────────────────────────────────────────────┘
                                      │
                                      ▼                                       ┌── 103
┌─────────────────────────────────────────────────────────────────────────────┐
│ Correct the target screen according to the target projection information, and  │
│ project the corrected target screen through the projector                      │
└─────────────────────────────────────────────────────────────────────────────┘
```

FIG. 1

EP 4 738 812 A1

**Description**

Field

The present disclosure relates to the technical field of projectors, in particular to a screen projection method and device of a projector, an electronic device, and a storage medium.

Background

Currently, in order to meet the demand for projection of images or videos and save cost, users generally select a projector with strong mobility, so that during use, screen projection can be performed by the projector onto different places, such as a living room and a bedroom. Based on this, users can frequently move between places during use, however, in applications of the projector, the screen needs to be corrected for different scenarios, so that the projector can present a normal rectangular screen on a projection surface.

In practical applications, after screen effects of the projector are adjusted in one scenario, once the projector is moved to another scenario, screen correction operations such as automatic/manual keystone correction or screen fit and obstacle avoidance need to be performed again on the projector, so that a relatively satisfactory screen effect can be re-adjusted.

However, it is necessary to perform automatic or manual screen correction on the projector each time the projector is moved to an application scenario, which relatively consumes time, especially for some high-frequency projection scenarios, such as a living room and a bedroom, a user may need to frequently move between the two places, and each time the user moves from the living room to the bedroom or from the bedroom to the living room, the screen needs to be re-adjusted once, and after each automatic adjustment is completed, slight adjustment is generally needed to achieve a satisfactory effect. Therefore, in the related art, when a scenario changes obviously or is switched, the screen of the projector needs to be corrected repeatedly, which causes tedious operations of the user and affects user experience.

Summary

The present disclosure provides a screen projection method and device of a projector, an electronic device, and a storage medium according to the independent claims to solve the technical problem in the related art that the screen of the projector needs to be corrected repeatedly, which causes tedious operations of the user and affects user experience. The dependent claims refer to further embodiments.

In a first aspect, an example of the disclosure provides a screen projection method including: when the projector receives a projection instruction and projects a target screen through the projector (based on the projector receiving a projection instruction and projecting a target screen through the projector), acquiring projection scenario information of the projector in a current projection scenario, and acquiring a preset historical projection record;
determining target projection information matching the current projection scenario according to (based on) the acquired projection scenario information and historical projection record; and correcting the target screen according to the target projection information, and projecting the corrected target screen through the projector.

In a possible example, the historical projection record is triggered by (based on) the projector after completing projection correction of the target screen, and is generated through steps of: when (based on) an instruction of saving the current projection scenario is received, acquiring the projection scenario information corresponding to the current projection scenario; and/or when (based on) the projection scenario information corresponding to the current projection scenario is not saved in the historical projection record, acquiring projection information of the current corrected target screen in the projector, and/or saving the projection scenario information corresponding to the current projection scenario and the projection information into the historical projection record.

In a possible example, said determining target projection information matching the current projection scenario according to the acquired projection scenario information and historical projection record includes:

inquiring from the historical projection record whether a target historical projection record corresponding to the projection scenario information is present; and/or
when (based on) it is determined that the target historical projection record is present, determining historical projection information included in the target historical projection record as the target projection information matching the current projection scenario.

In a possible example, said acquiring projection scenario information of the projector in a current projection scenario includes:

determining a current projection mode of the projector, and a scenario image of the projector in the current projection scenario, the scenario image including a projection screen when the projector projects (based on the projector projecting) the target screen onto a projection surface; and/or

performing image recognition on the scenario image to obtain a feature value corresponding to the scenario image; and/or

updating the projection mode and the feature value to the projection scenario information of the projector in the current projection scenario.

In a possible example, the historical projection record includes a plurality of first historical projection records, and said inquiring from the historical projection record whether a target historical projection record corresponding to the projection scenario information is present includes: matching the projection mode and the feature value with the plurality of first historical projection records in the historical projection record, the first historical projection record preferably including a historical projection mode and a historical feature value of the projector, and first coordinate information of a projection screen in the projector during a historical projection process; and/or in a case where the first historical projection record is matched, in which the historical projection mode is the same as the projection mode and the historical feature value is the same as the feature value, determining that the target historical projection record corresponding to the projection scenario information is present in the historical projection record; and/or

determining the first historical projection record as the target historical projection record, and/or said determining historical projection information included in the target historical projection record as the target projection information matching the current projection scenario includes:

determining the first coordinate information recorded in the target historical projection record as the target projection information.

In a possible example, said updating the projection mode and the feature value to the projection scenario information of the projector in the current projection scenario includes:

acquiring current attitude information of the projector; and/or

determining distance information between the projector and the projection surface in the current projection scenario by a distance sensor in the projector; and/or

updating the projection mode, the feature value, the attitude information, and the distance information to the projection scenario information corresponding to the current projection scenario of the projector.

In a possible example, said inquiring from the historical projection record whether a target historical projection record corresponding to the projection scenario information is present includes:

matching the projection mode, the feature value, the attitude information, and the distance information with a plurality of first historical projection records in the historical projection record, the first historical projection record including a historical projection mode, a historical feature value, historical attitude information and historical distance information of the projector, and first coordinate information of a projection screen in the projector during a historical projection process; and/or

in a case where the first historical projection record is matched, in which the historical projection mode is the same as the projection mode and/or the historical feature value is the same as the feature value and/or the historical attitude information is the same as the attitude information and/or a difference between the historical distance information and the distance information belongs to a preset range, determining that a target historical projection record corresponding to the projection scenario information is present in the historical projection record; and/or

determining the first historical projection record as the target historical projection record, and/or said determining historical projection information included in the target historical projection record as the target projection information matching the current projection scenario includes:

determining the first coordinate information recorded in the target historical projection record as the target projection information.

In a possible example, the screen projection method further includes:

when it is determined (based on being determined) that the target historical projection record is not present, displaying a pre-stored historical projection record list including a plurality of second historical projection records, the plurality of second historical projection records including a scenario identifier of a historical projection scenario and second coordinate information of a projection screen in the projector during a historical projection process; and/or

receiving a trigger operation for any one of the second historical projection records in the historical projection record list; and/or

in response to the received trigger operation, determining the second historical projection record corresponding to the trigger operation as the target historical projection record, and/or

said determining target projection information matching the current projection scenario includes:

determining the second coordinate information in the target historical projection record as the target projection information.

In a possible example, the screen projection method further includes:

when it is determined (based on being determined) that the target historical projection record is not present, determining a correction rule; and/or

correcting the target screen according to the correction rule; and/or

when it is determined (based on being determined) that the correction of the target screen is completed, determining a current target projection mode of the projector and a target scenario image of the projector in the current projection scenario, the target scenario image including a target projection screen when the projector projects the corrected target screen onto the projection surface; and/or

determining a target feature value corresponding to the target scenario image; and/or

saving the target projection mode, the target feature value, and target coordinate information of the corrected target screen in the projector as a first historical projection record in the historical projection record.

In a possible example, the screen projection method further includes:

when it is determined (based on being determined) that the target historical projection record is not present and a trigger operation for any one of the second historical projection records in the historical projection record list is not received, determining a correction rule; and/or

correcting the target screen according to the correction rule; and/or

when it is determined (based on being determined) that the correction of the target screen is completed, acquiring a target scenario identifier of the current projection scenario input by a user; and/or

saving the target scenario identifier and target coordinate information of the corrected target screen in the projector as a second projection record in the historical projection record list.

In a possible example, said performing image recognition on the scenario image to obtain a feature value corresponding to the scenario image includes:

extracting corner point information from the scenario image through a preset corner point detection method, the corner point information including coordinate information in the scenario image of the corner point in the scenario image; and/or

determining the corner point information as the feature value corresponding to the scenario image.

In a possible example, whether the feature value is the same as the historical feature value is determined in the following manner:

determining a world coordinate corresponding to the corner point information according to the attitude information, the distance information, and the corner point information; and/or

according to the historical attitude information, the historical distance information, and historical corner point information corresponding to the historical feature value, determining a historical world coordinate corresponding to the historical corner point information; and/or

comparing a point cloud corresponding to the world coordinate with a historical point cloud corresponding to the historical world coordinate, thereby determining an overlap degree between the point cloud and the historical point cloud; and/or

when / based on the overlap degree being greater than a preset overlap degree threshold, determining that the feature value is the same as the historical feature value; or when / based on the overlap degree being less than a preset overlap degree threshold, determining that the feature value is not the same as the historical feature value.

In a possible example, said correcting the target screen according to the target projection information includes:

determining a current coordinate and a historical coordinate of a same physical space coordinate point according to the world coordinate and the historical world coordinate; and/or

acquiring historical distance information corresponding to the distance information in the target projection information; and/or

determining a current horizontal offset and a current vertical offset of the projector according to the current coordinate, the historical coordinate, the distance information, and the historical distance information; and/or

moving the projector according to the horizontal offset and the vertical offset to correct the target screen.

In a possible example, said correcting the target screen according to the target projection information includes:

determining whether there is a historical adjustment parameter corresponding to the target projection information within a preset historical period, the historical adjustment parameter referring to an adjustment parameter with which the user adjusts the projector after the projector is corrected according to the target projection information in the historical period; and/or

in a case where the historical adjustment parameter is present, correcting the target screen according to the target projection information and the historical adjustment parameter, or

in a case where the historical adjustment parameter is not present, correcting the target screen according to the target projection information.

The historical projection record may comprise a history of different settings of the projector in different locations.

The determination module may be configured to determine the target projection information based on a determination that the projector has moved.

According to an example, a method for dynamically adjusting projection via a projector comprises: collecting, during projection of a display via the projector at a first time and in a first location, projection scenario information indicating current projection parameters of the projector at the first time; detecting, after the first time, movement of the projector from a first location to a second location; calculating, based on the movement of the projector, the current projection parameters, and a history of projection activity of the projector, new projection parameters; and causing the projector to project the display using the new projection parameters.

The detecting of the movement of the projector may comprise detecting, via a sensor of the projector, movement of the projector.

The history of projection activity may comprise a history of projection parameters used by the projector when projecting the display in a plurality of different locations.

In a second aspect, the disclosure provides a screen projection device of a projector including: an acquisition module configured to acquire projection scenario information of the projector in a current projection scenario and acquire a preset historical projection record when (based on) the projector receives (receiving) a projection instruction and projects (projecting) a target screen through the projector;

a determination module configured to determine target projection information matching the current projection scenario according to the acquired projection scenario information and historical projection record; and

a correction module configured to correct the target screen according to the target projection information and project the corrected target screen through the projector.

In a third aspect, the disclosure provides an electronic device including a processor and a memory, wherein the processor is configured to execute a screen projection program of a projector stored in the memory to implement the screen projection method of a projector of any one of the first aspect.

In a fourth aspect, the disclosure provides a storage medium on which one or more computer programs are stored, wherein the one or more computer programs are executed by one or more processors to implement the screen projection method of a projector of any one of the first aspect.

The technical solution according to the example of the disclosure includes: when the projector receives a projection instruction and projects a target screen through the projector, acquiring projection scenario information of the projector in a current projection scenario, and acquiring a preset historical projection record; determining target projection information matching the current projection scenario according to the acquired projection scenario information and historical projection record; and correcting the target screen according to the target projection information, and projecting the corrected target screen through the projector. In this technical solution, when the target screen is projected through the projector, the target projection information of the projector in a historical projection process in the projection scenario is determined according to the historical projection record of the current projection scenario where the projector is located, so as to correct the target screen to be projected according to the target projection information. Compared with correcting the screen of the projector each time the projection scenario is changed, the target screen projected by the projector can be corrected more simply and efficiently, which can correct the projection screen of the projector efficiently and simply after the projection scenario of the projector is changed, thereby efficiently and accurately projecting a screen through the projector and improving the user experience.

Brief Description of the Drawings

Accompanying drawings, which are incorporated in and constitute a part of this specification, illustrate examples according to the disclosure, which together with the specification serve to explain principles of the disclosure.
In order to more clearly illustrate technical solutions in examples of the disclosure or in the related art, the drawings that need to be used in description of the examples or the related art are briefly introduced below, and it is apparent that the accompanying drawings described below are merely some examples of the present disclosure, and for those of ordinary skill in the art, other drawings can be obtained based on these drawings without inventive work.
One or more examples are illustrated by figures in the corresponding drawings, which does not constitute a limitation of the examples. Elements with the same reference numerals in the drawings represent similar elements, and the drawings do not constitute a scale limitation unless otherwise specified.

FIG. 1   is an example flowchart of a screen projection method of a projector according to an example of the present disclosure;
FIG. 2   is an example flowchart for determining target projection information according to an example of the present disclosure;
FIG. 3   is a schematic flowchart for adding a first historical projection record according to an example of the present disclosure;
FIG. 4   is another example flowchart for determining target projection information according to an example of the present disclosure;
FIG. 5   is another schematic flowchart for adding a first historical projection record according to an example of the present disclosure;
FIG. 6   is still another example flowchart for determining target projection information according to an example of the present disclosure;
FIG. 7   is a schematic flowchart for adding a second historical projection record according to an example of the present disclosure;
FIG. 8   is a geometric relationship diagram before and after a projector is moved according to an example of the present disclosure;
FIG. 9   is an example block diagram of a screen projection device of a projector according to an example of the present disclosure; and
FIG. 10   is a structure diagram of an electronic device according to an example of the present disclosure.

Detailed Description

In order to make objects, technical solutions, and advantages of examples of the disclosure clearer, the technical solutions in the examples of the disclosure will be clearly and fully described in combination with the accompanying drawings in the examples of the present disclosure. Obviously, the examples to be described are part of examples but not all examples of the disclosure. Based on the examples of the disclosure, all other examples obtained by those of ordinary skill in the art without inventive work shall fall within the scope of the disclosure.
Many different examples are disclosed below to realize different structures of the disclosure. In order to simplify the disclosure, components and arrangements of specific examples are described below. Of course, they are only exemplary and are not intended to limit the disclosure. Furthermore, the present disclosure may repeat reference numerals and/or letters in different examples. The repetition is for simplicity and clarity, and in itself does not indicate the relationship between the various examples and/or arrangements discussed.
In order to solve the technical problem in the related art that the screen of the projector needs to be corrected repeatedly, which causes tedious operations of the user and affects user experience, the present disclosure provides a screen projection method and device of a projector, an electronic device, and a storage medium. When the target screen is projected through the projector, the target projection information of the projector in a historical projection process in the projection scenario is determined according to the historical projection record of the current projection scenario where the projector is located, so as to correct the target screen to be projected according to the target projection information. Compared with correcting the screen of the projector each time the projection scenario is changed, the target screen projected by the projector can be corrected more simply and efficiently, which can correct the projection screen of the projector efficiently and simply after the projection scenario of the projector is changed, thereby efficiently and accurately projecting a screen through the projector and improving the user experience.
The screen projection method of a projector provided by the disclosure will be further explained below with reference to specific examples in conjunction with the accompanying drawings, and the examples do not limit the examples of the present disclosure.

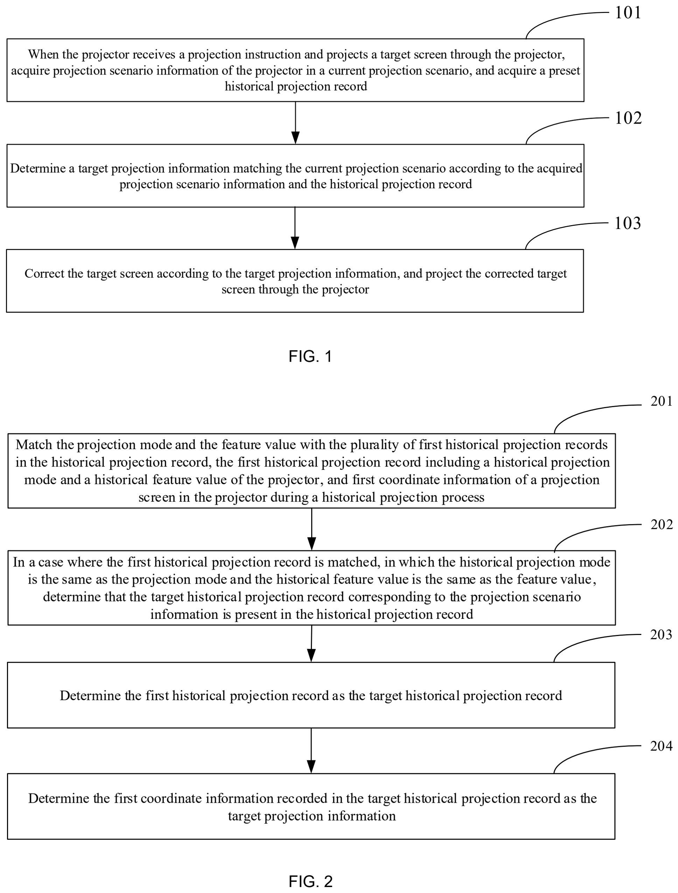

Referring to FIG. 1, FIG. 1 is an example flowchart of a screen projection method of a projector according to an example of the present disclosure. As shown in FIG. 1, the flow includes the following Steps 101 to 103.

Step 101: when the projector receives a projection instruction and projects a target screen through the projector, acquiring projection scenario information of the projector in a current projection scenario, and acquiring a preset historical projection record.

The projector is also called a projection machine and is a device that can project an image or video onto a screen.

Correspondingly, the target screen is a screen to be projected by the projector. The target screen can be an image or video, which is not limited in the examples of the present disclosure.

The projection instruction refers to an instruction used to instruct the projector to project the target screen. The instruction can be generated by a remote control device and sent to the projector, or can be generated by being triggered by a preset button of the projector.

The current projection scenario refers to an actual scenario where the projector is located, and can be a user's living room, a bedroom, a classroom, or the like, which is not limited in the examples of the present disclosure.

The scenario information refers to information related to the current projection scenario of the projector, and can include but not be limited to: a scenario image, a feature value of the scenario image, and a projection mode of the projector in the current projection scenario, and the like.

The historical projection record refers to a historical projection record of the projector within a historical period, and can include all historical projection records of the projector within the historical period. Each of the historical projection records can include but not be limited to: a projection scenario of the projector, projection scenario information corresponding to the projection scenario, and projection information of the projector within the historical period, and the like.

In practical applications, in order to meet the demand for projection of images or videos and to save cost, users generally select a projector with a strong mobility, so that during use, screen projection can be performed by the projector onto different places, such as a living room and a bedroom. Based on this, a user can frequently move between places during use, however, in the application of the projector, the screen needs to be corrected for different scenarios, so that the projector can present a normal rectangular screen on a projection surface.

However, it is necessary to perform automatic or manual screen correction on the projector each time the projector is moved to an application scenario, which relatively consumes time, especially for some high-frequency projection scenarios, such as a living room and a bedroom, a user may need to frequently move between the two places, and each time the user moves from the living room to the bedroom or from the bedroom to the living room, the screen needs to be re-adjusted once, and after each automatic adjustment is completed, slight adjustment is generally needed to achieve a satisfactory effect. Therefore, in the related art, when a scenario changes obviously or is switched, the screen of the projector needs to be corrected repeatedly, which causes tedious operations of the user and affects user experience.

When the projector receives the projection instruction and projects the target screen through the projector, before correcting the target screen, the projection scenario information of the projector in the current projection scenario is first acquired, and the preset historical projection record is acquired, so as to correct the target screen according to the historical projection record, thereby enabling quick and accurate correction of the target screen.

The historical projection record can be triggered by the projector after completing projection correction of the target screen, and can be generated through the following steps: when an instruction of saving the current projection scenario is received, acquiring the projection scenario information corresponding to the current projection scenario. Afterwards, when the projection scenario information corresponding to the current projection scenario is not saved in the historical projection record, acquiring projection information of the current corrected target screen in the projector, and saving the projection scenario information corresponding to the current projection scenario and the projection information into the historical projection record. The projection information can be coordinate information of the corrected target screen in the projector.

In an example, when a user moves the projector to a new projection scenario for the first time (for example, from a living room to a bedroom), in a case where the target screen is projected through the projector, a screen to be projected in the projector can be corrected first. Afterwards, after the correction of the screen to be projected is completed, the projection scenario information related to the scenario is acquired, and the projection scenario information and coordinate information of the corrected screen in the projector are saved as a historical projection record into the historical projection record. The projection scenario information refers to information related to the scenario where the projector is located, and can include but not be limited to a scenario image, a feature value of the scenario image, and a projection mode of the projector in the current projection scenario, and the like.

Based on this, an execution subject of the example of the present disclosure can acquire the projection scenario information of the projector in the current projection scenario. The projection scenario information refers to scenario information related to the current projection scenario, and can include but not be limited to: a scenario image, a feature value of the scenario image, a projection mode of the projector in the current projection scenario, and the like.

As an optional implementation, a current projection mode of the projector, and a scenario image of the projector in the current projection scenario can be determined. The scenario image can include a projection screen when the projector projects the target screen onto a projection surface in the current projection scenario.

Afterwards, image recognition can be performed on the scenario image to obtain a feature value corresponding to the scenario image, and the projection mode and the feature value are updated to the projection scenario information of the projector in the current projection scenario. In addition, the scenario image is also determined as the projection scenario information of the projector in the current projection scenario.

As an exemplary implementation, the feature value of the scenario image can be a corner point in the scenario image. Based on this, when the scenario image is recognized to determine the feature value corresponding to the scenario image, corner point information can be extracted from the scenario image through a preset corner point detection method. The corner point detection method can be Harris corner point detection, the corner point information can be coordinate information of the corner point in the scenario image, and the corner point refers to an extreme value point, that is, a point with particularly prominent attributes in some aspects, for example, a special point such as a wall corner in the scenario image.

Afterwards, the corner point information can be determined as the feature value corresponding to the scenario image.

As another optional implementation, on the basis of using the projection mode and the feature value as the projection scenario information of the projector in the current projection scenario, current attitude information of the projector can also be acquired. The attitude information here refers to attitude information of the projector when projecting the target screen, and the attitude information can include a relative position relationship between components in the projector.

As an exemplary implementation, information such as acceleration and direction of the projector during movement can be detected by a gravity sensor (for example, a G-Sensor), thereby calculating the current attitude information of the projector.

Afterwards, distance information between the projector and the projection surface in the current projection scenario can be determined by a distance sensor in the projector, and the projection mode, the feature value, the attitude information, and the distance information can be determined as the projection scenario information of the projector in the current projection scenario.

At this point, the projection scenario information of the projector in the current projection scenario can be determined.

Step 102: determining target projection information matching the current projection scenario according to the acquired projection scenario information and historical projection record.

Step 103: correcting the target screen according to the target projection information, and projecting the corrected target screen through the projector.

The Step 102 and Step 103 are described together below.

The target projection information refers to coordinate information in an optical module of the projector of each corner of a polygon formed by the screen to be projected by the projector.

When the projector projects the screen to be projected, when the coordinate information of the screen to be projected in the optical module of the projector meets preset conditions, the projected screen forms a rectangle on the projection surface.

In an example, the historical projection record of the projector can include historical projection information of the projector in a historical projection screen. Based on this, the execution subject of the example of the present disclosure can determine the target projection information matching the current projection scenario according to the acquired projection scenario information and a target historical projection distance, so as to correct the target screen according to the target projection information, to project the corrected target screen through the projector.

As an optional implementation, whether a target historical projection record corresponding to the projection scenario information is present can be queried in the historical projection record.

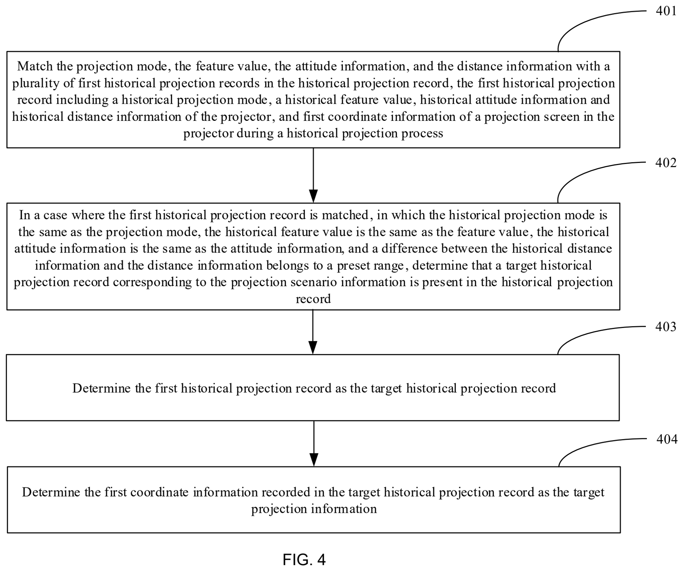

How to specifically determine whether the target historical projection record corresponding to the projection scenario information is present in the historical projection record can be described below with reference to FIG. 2 and FIG. 4 respectively, which is not detailed here.

Optionally, when it is determined that the target historical projection record is present, the historical projection information included in the target historical projection record can be determined as the target projection information matching the current projection scenario.

Conversely, when it is determined that the target historical projection record is not present, whether a target historical projection record is present in a preset second historical projection record can be determined. The second historical projection record can include a scenario identifier of a projection scenario, and projection information in the projection scenario corresponding to the scenario identifier.

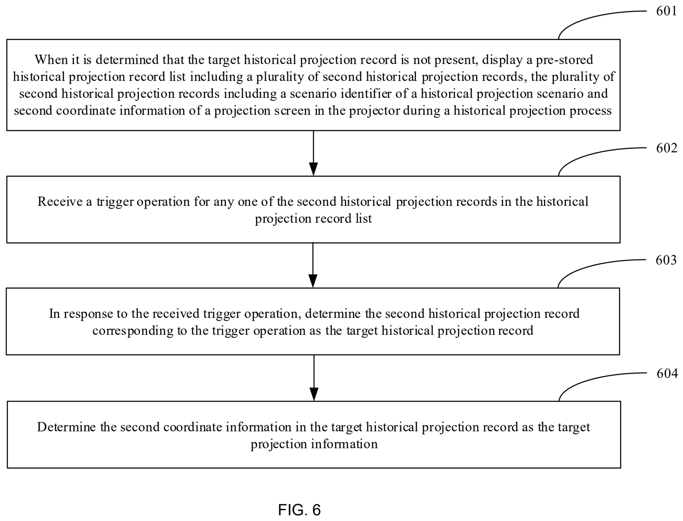

How to specifically determine whether the target historical projection record is present in the preset second historical projection record can be described below with reference to the process shown in FIG. 6, which is not detailed here.

In an example, as described in Step 101, the historical projection record of the projector can include a plurality of first historical projection records. On this basis, in addition to the projection scenario information, the first historical projection record further includes first coordinate information of a projection screen in the projector during a historical projection process, and the first coordinate information is the historical projection information recorded in the first historical projection record.

Based on this, when it is determined that the target historical projection record is present in the historical projection record, the first coordinate information in the target historical projection record can be determined as the target projection information of the projector in the historical projection screen.

As another optional implementation, the projector can include a second historical projection record. On this basis, in addition to the scenario identifier, the second historical projection record further includes second coordinate information of the projection screen in the projector during the historical projection process.

Based on this, when it is determined that the second historical projection record is included in the historical projection record, the second coordinate information in the second historical projection record can be determined as the target projection information of the projector in the historical projection screen.

In an example, as described in Step 101, the target scenario information corresponding to the current projection scenario can include the feature value of the scenario image and the distance information between the projector and the projection surface, and the feature value is the corner point information in the scenario image. Based on this, when the target screen is corrected according to the target projection information, a same physical space coordinate point can be determined according to a world coordinate corresponding to the corner point information and a historical world coordinate corresponding to historical corner point information included in a historical feature value, and a current coordinate and a historical coordinate of an image of the physical space coordinate point in an undistorted screen of a camera of the projector can be determined.

Afterwards, historical distance information corresponding to the distance information in the target projection information can be acquired, and a current horizontal offset and a current vertical offset of the projector can be determined according to the current coordinate, the historical coordinate, the distance information, and the historical distance information. The horizontal offset and the vertical offset here refer to a current offset of the projector relative to the target projection information in the historical projection record.

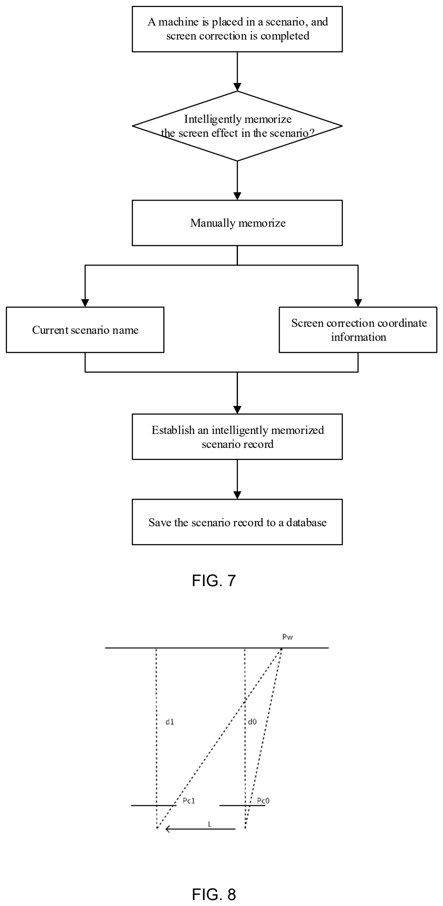

As an optional implementation, reference can be made to the geometric relationship shown in FIG. 8, and the horizontal offset and the vertical offset can be determined by the following formula (1). Referring to FIG. 8, FIG. 8 is a geometric relationship diagram before and after a projector is moved according to an example of the present disclosure:

$$
\begin{aligned}
L_x &= d_1 * (x_1 - c_x) / f_x - d_0 * (x_0 - c_x) / f_x \\
L_y &= d_1 * (y_1 - c_y) / f_y - d_0 * (y_0 - c_y) / f_y
\end{aligned}
\qquad \text{Equation (1)}
$$

where the historical coordinate is $(x_0, y_0)$, the current coordinate is $(x_1, y_1)$, the historical distance information is $d_0$, the distance information is $d_1$, and $c_x$, $c_y$, $f_x$, and $f_y$ are all intrinsic parameters of a camera in the projector.

Finally, the projector can be moved according to the horizontal offset and the vertical offset to implement correction of the target screen.

In an example, due to different user habits, after the projector is corrected according to the target projection information and the user saves the historical projection record in this scenario, the result may not conform to the user's projection habit, so the user adjusts some parameters in the projection scenario. Then, the execution subject of the example of the present disclosure can record the parameters adjusted by the user currently.

Based on this, when the execution subject of the example of the present disclosure corrects the target screen according to the target projection information, the execution subject can determine whether there is a historical adjustment parameter corresponding to the target projection information within a preset historical period, the historical adjustment parameter referring to an adjustment parameter with which the user adjusts the projector after the projector is corrected according to the target projection information in the historical period.

Optionally, in a case where the historical adjustment parameter is present, the target screen can be corrected according to the target projection information and the historical adjustment parameter.

As an exemplary implementation, the target projection information can be corrected according to the historical adjustment parameter to obtain new target projection information, and the target screen projected by the projector can be corrected according to the new target projection information.

Conversely, in a case where the historical adjustment parameter is not present, the target screen can be corrected according to the target projection information.

In addition, in a case where the historical projection record includes the scenario image, before the target screen is corrected according to the target projection information, the execution subject of the example of the present disclosure can replace the target screen with the scenario image in the historical projection record, and inquires through a pop-up box whether to apply a screen effect of the scenario image corresponding to the historical projection record.

Optionally, if the user selects "yes", in a case where the execution subject of the example of the present disclosure detects a trigger operation by the user on a "yes" button, the target screen can be corrected according to the determined target projection information.

In the technical solution according to the example of the present disclosure, when the projector receives the projection instruction and projects the target screen through the projector, the projection scenario information of the projector in the current projection scenario is acquired, and the preset historical projection record is acquired; target projection information matching the current projection scenario is determined according to the acquired projection scenario information and historical projection record; and the target screen is corrected according to the target projection information, and the corrected target screen is projected through the projector. In this technical solution, when the target screen is projected through the projector, the target projection information of the projector in a historical projection process in the projection scenario is determined according to the historical projection record of the current projection scenario where the projector is located, so as to correct the target screen to be projected according to the target projection information. Compared with correcting the screen of the projector each time the projection scenario is changed, the target screen projected by the projector can be corrected more simply and efficiently, which can correct the projection screen of the projector efficiently and simply after the projection scenario of the projector is changed, thereby efficiently and accurately projecting a screen through the projector and improving the user experience.

Referring to FIG. 2, FIG. 2 is an example flowchart for determining target projection information according to an example of the present disclosure. On the basis of the process shown in FIG. 1, the process shown in FIG. 2 describes how to specifically determine the target historical projection record and the target projection information in a case where the scenario information includes a projection mode and a feature value. As shown in FIG. 2, the process includes the following steps 201 to 204.

Step 201: matching the projection mode and the feature value with a plurality of first historical projection records in the historical projection record, the first historical projection record including a historical projection mode and a historical feature value of the projector, and first coordinate information of a projection screen in the projector during a historical projection process.

Step 202: in a case where the first historical projection record is matched, in which the included historical projection mode is the same as the projection mode, and the included historical feature value is the same as the feature value, determining that the target historical projection record corresponding to the projection scenario information is present in the historical projection record.

Step 203: determining the first historical projection record as the target historical projection record.

The Step 201 to Step 203 are described together below.

The first historical projection record refers to a record of the projector when projecting a screen in a historical period, and can include but not be limited to: the historical projection mode, the historical feature value, a historical scenario image, and first coordinate information of the projection screen in the projector during the historical projection process.

Since the historical feature value is a feature value corresponding to the historical scenario image, the projection scenario corresponding to the historical projection record can be determined by the historical feature value.

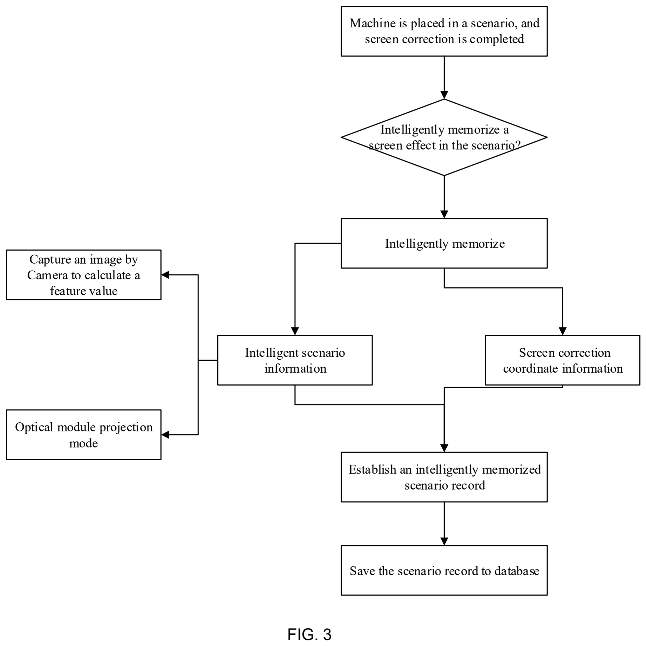

In an example, the execution subject of the example of the present disclosure can save the first historical projection record of the projector through the process shown in FIG. 3. Referring to FIG. 3, FIG. 3 is a schematic flowchart for adding a first historical projection record according to an example of the present disclosure. As shown in FIG. 3, the process can include: when a machine, that is, the projector, is placed in a scenario, after a user completes correction of the screen, after the execution subject of the example of the present disclosure detects that the screen correction is completed, a pop-up box can be output to inquire whether to intelligently memorize a screen effect in the scenario. The screen effect refers to a projection effect corresponding to the projection screen, and can include projection information, for example, coordinate information of the projection screen in the projector.

Optionally, in a case where a trigger operation on a button corresponding to "yes" is received, the execution subject of the example of the present disclosure can capture a scenario image of the projector in the current scenario through a camera connected thereto. The scenario image includes an image of the projector projecting the screen on the projection surface. Afterwards, a feature value corresponding to the scenario image can be determined.

At the same time, a current projection mode of the projector can be determined, and the feature value and the projection mode can be determined as the projection scenario information.

Afterwards, coordinate information after the screen correction can be acquired, and an intelligently memorized scenario record (that is, the first historical projection record) including the projection scenario information and the coordinate information can be established, and the scenario record can be saved to a database (that is, the historical projection record).

Based on this, when the execution subject of the example of the present disclosure inquiries from the historical projection record whether the target historical projection record corresponding to the projection scenario information is present, the projection mode and the feature value can be matched with the plurality of first historical projection records in the historical projection record, thereby matching the target historical projection record.

Optionally, in the case where the first historical projection record is matched, in which the included historical projection mode is the same as the projection mode and the historical feature value is the same as the feature value, it can be determined that the target historical projection record corresponding to the projection scenario information is present in the historical projection record. Afterwards, the first historical projection record can be determined as the target historical projection record.

It should be noted that, the historical feature value and the feature value being the same means that values of the two are completely the same, or that the values of the two are both within a preset range, which is not limited in the examples of the present disclosure.

Similarly, the historical attitude information and the attitude information being the same can mean that the two are completely the same or within a preset range, which is not limited in the examples of the present disclosure. For example, for an angle between two components, the angle of the historical attitude information is 30°, and the angle of the attitude information is 35°, both of which belong to a range of [30°, 40°], so it can be determined that the two are the same.

As an exemplary implementation, the feature value of the scenario image can be a corner point in the scenario image. Based on this, when the scenario image is recognized to determine the feature value corresponding to the scenario image, corner point information can be extracted from the scenario image through a preset corner point detection method. The corner point detection method can be Harris corner point detection, the corner point information can be a corner point coordinate of the corner point in the scenario image, and the corner point refers to an extreme value point, that is, a point with particularly prominent attributes in some aspects, for example, a special point such as a wall corner in the scenario image.

Afterwards, the corner point information can be determined as the feature value corresponding to the scenario image.

Based on this, whether the feature value is the same as the historical feature value can be determined in the following manner: first, the current attitude information of the projector can be acquired (including but not limited to a yaw angle and a pitch angle of the projector), and distance information between the projector and the projection surface in the current projection scenario can be determined by a preset distance sensor. The projection surface can refer to a plane where the target screen projected by the projector is located, for example, a wall surface in the current projection scenario.

Afterwards, a world coordinate corresponding to the corner point information can be determined according to the attitude information, the distance information, and the corner point information. The world coordinate here refers to coordinate information of the corner point corresponding to the corner point information in an actual space, and a historical world coordinate corresponding to historical corner point information is determined according to the historical attitude information, the historical distance information, and the historical corner point information corresponding to the historical feature value.

After that, a point cloud corresponding to the world coordinate can be compared with a historical point cloud of the historical world coordinate corresponding to the historical corner point information, thereby determining an overlap degree between the point cloud and the historical point cloud.

Finally, it can be determined whether the overlap degree is greater than a preset overlap degree threshold. Optionally, if the overlap degree is greater than the preset overlap degree threshold, it can be determined that the feature value is the same as the historical feature value. Conversely, if the overlap degree is less than the preset overlap degree threshold, it can be determined that the feature value is not the same as the historical feature value.

Optionally, in a case where the target historical projection record is not matched, the execution subject of the example of the present disclosure can determine the target historical projection record from the second historical projection record. The second historical projection record includes a scenario identifier corresponding to the projection scenario of the projector and second coordinate information of the projection screen in the projector during the historical projection process.

How to specifically determine the target historical projection record from the second historical projection record can be described below with reference to the process shown in FIG. 6, which is not detailed here.

Optionally, in the case where the target historical projection record is not matched, the target screen can be corrected automatically or manually. Specifically, a correction rule can be determined. The correction rule refers to an automatic correction rule or a manual correction rule selected by a user, which is not limited in the examples of the present disclosure.

Afterwards, the target screen can be corrected according to the correction rule, and when it is determined that the correction of the target screen is completed, a current target projection mode of the projector and a target scenario image of the projector in the current projection scenario are determined. The target scenario image includes a target projection screen when the projector projects the corrected target screen onto the projection surface.

Based on this, a target feature value corresponding to the target scenario image can be determined, and the target projection mode, the target feature value, and target coordinate information of the corrected target screen in the projector are stored as a first historical projection record in a preset first database. The first database is a database for storing the historical projection record.

Step 204: determining the first coordinate information recorded in the target historical projection record as the target projection information.

In the example of the present disclosure, when it is determined that the target historical projection record is present in the historical projection record, the first coordinate information recorded in the historical projection record can be determined as the target projection information, so as to correct the target screen according to the target projection information.

In the technical solution according to the example of the present disclosure, the projection mode and the feature value is matched with the plurality of first historical projection records in the historical projection record. The first historical projection record includes the historical projection mode and the historical feature value of the projector, and the first coordinate information of the projection screen in the projector during the historical projection process. **In** the case where the first historical projection record is matched, in which the included historical projection mode is the same as the projection mode, and the historical feature value is the same as the feature value, it is determined that the target historical projection record corresponding to the projection scenario information is present in the historical projection record, the first historical projection record is determined as the target historical projection record, and the first coordinate information recorded in the target historical projection record is determined as the target projection information. In this technical solution, the target historical projection record is determined from the historical projection record through the feature value and the projection mode corresponding to the projection scenario, so as to determine the target projection information corresponding to the target screen to correct the target screen. Compared with correcting the screen of the projector each time the projection scenario is changed, the target screen projected by the projector can be corrected more simply and efficiently, which can correct the projection screen of the projector efficiently and simply after the projection scenario of the projector is changed, thereby efficiently and accurately projecting a screen through the projector and improving the user experience.

Referring to FIG. 4, FIG. 4 is another example flowchart for determining target projection information according to an example of the present disclosure. On the basis of the process shown in FIG. 1, the process shown in FIG. 4 describes how to specifically determine the target historical projection record and the target projection information in a case where the scenario information includes the projection mode, the feature value, the attitude information of the projector, and the distance information between the projector and the projection surface. As shown in FIG. 4, the process can include the following steps 401 to 404.

Step 401: matching the projection mode, the feature value, the attitude information, and the distance information with a plurality of first historical projection records in the historical projection record, in which the first historical projection record includes a historical projection mode, a historical feature value, historical attitude information and historical distance information of the projector, and first coordinate information of a projection screen in the projector during a historical projection process.

Step 402: in a case where the first historical projection record is matched, in which the historical projection mode is the same as the projection mode, the historical feature value is the same as the feature value, the historical attitude information is the same as the attitude information, and a difference between the historical distance information and the distance information belongs to a preset range, determining that a target historical projection record corresponding to the projection scenario information is present in the historical projection record.

Step 403: determining the first historical projection record as the target historical projection record.

The Step 401 to Step 403 are described together below.

The first historical projection record refers to a record of the projector when projecting a screen in a historical period, that is, a historical projection record included in the historical projection record, and can include but not be limited to: the historical projection mode, the historical feature value, the historical scenario image, the historical attitude information of the projector during the historical projection process, the distance information from the projection surface during the historical projection process of the projector, and the first coordinate information of the projection screen in the projector during the historical projection process, and the like.

Since the historical feature value is a feature value corresponding to the historical scenario image, the projection scenario corresponding to the historical projection record can be determined by the historical feature value.

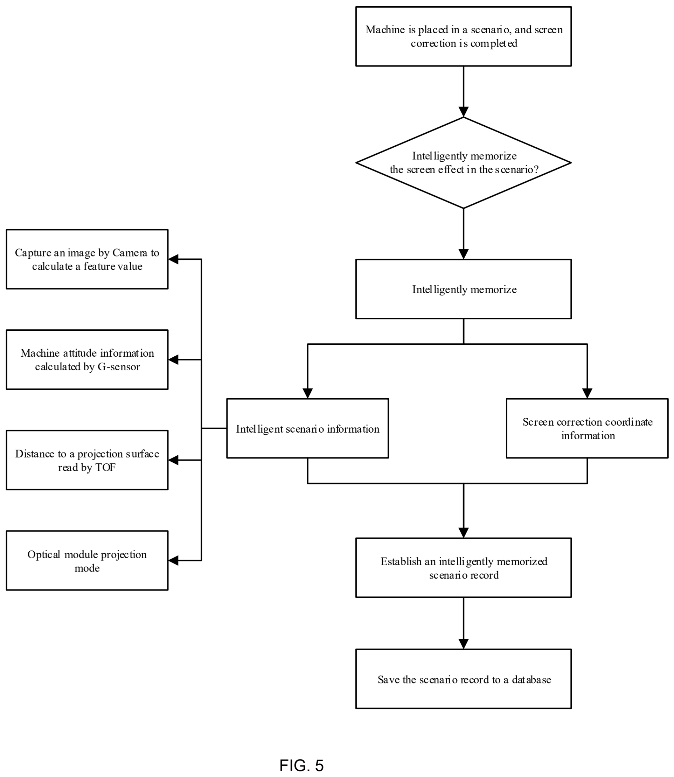

In an example, the execution subject of the example of the present disclosure can save the first historical projection record of the projector through the process shown in FIG. 5. Referring to FIG. 5, FIG. 5 is another schematic flowchart for adding a first historical projection record according to an example of the present disclosure. As shown in FIG. 5, the process can include: when a machine, that is, the projector, is placed in a scenario, after a user completes correction of the screen, after the execution subject of the example of the present disclosure detects that the screen correction is completed, a pop-up box can be output to inquire whether to intelligently memorize a screen effect in the scenario. The screen effect refers to a projection effect corresponding to the projection screen, and can include projection information, for example, coordinate information of the projection screen in the projector.

Optionally, in a case where a trigger operation on a button corresponding to "yes" is received, the execution subject of the example of the present disclosure can capture a scenario image of the projector in the current scenario through a camera connected thereto. The scenario image includes an image of the projector projecting the screen on the projection surface. Afterwards, a feature value corresponding to the scenario image can be determined.

Afterwards, a current projection mode of the projector can be determined, and attitude information of the projector is calculated by a G-Sensor (acceleration sensor), and distance information between the projector and the projection surface is measured by a TOF (Time of Flight) sensor.

Afterwards, the feature value, the projection mode, the attitude information, and the distance information can be determined as intelligent scenario information.

After that, coordinate information after the screen correction can be acquired, and an intelligently memorized scenario record (that is, the first historical projection record) including the projection scenario information and the coordinate information can be established, and the scenario record can be saved to the historical projection record.

Based on this, when the execution subject of the example of the present disclosure determines the historical projection record of the projector in the current projection scenario, the execution subject can match the projection mode, the feature value, the attitude information, and the distance information with the plurality of first historical projection records in the historical projection record, thereby matching the target historical projection record.

Optionally, in the case where the first historical projection record is matched, in which the included historical projection mode is the same as the projection mode and the historical feature value is the same as the feature value, the historical attitude information is the same as the attitude information, and a difference between the historical distance information and the distance information belongs to a preset range, it can be determined that the target historical projection record corresponding to the projection scenario information is present in the plurality of first historical projection records in the historical projection record. Afterwards, the first historical projection record can be determined as the target historical projection record.

It should be noted that, the historical feature value and the feature value being the same means that values of the two are completely the same, or that the values of the two are both within a preset range, which is not limited in the examples of the present disclosure.

Similarly, the historical attitude information and the attitude information being the same can mean that the two are completely the same or within a preset range, which is not limited in the examples of the present disclosure. For example, for an angle between two components, the angle of the historical attitude information is 30°, and the angle of the attitude information is 35°, both of which belong to a range of [30°, 40°], so it can be determined that the two are the same.

As an exemplary implementation, the feature value of the scenario image can be a corner point in the scenario image. Based on this, when the scenario image is recognized to determine the feature value corresponding to the scenario image, corner point information can be extracted from the scenario image through a preset corner point detection method. The corner point detection method can be Harris corner point detection, the corner point information can be a corner point coordinate of the corner point in the scenario image, and the corner point refers to an extreme value point, that is, a point with particularly prominent attributes in some aspects, for example, a special point such as a wall corner in the scenario image.

Afterwards, the corner point information can be determined as the feature value corresponding to the scenario image.

Based on this, whether the feature value is the same as the historical feature value can be determined in the following manner: first, the current attitude information of the projector can be acquired (including but not limited to a yaw angle and a pitch angle of the projector), and distance information between the projector and the projection surface in the current projection scenario can be determined by a preset distance sensor. The projection surface can refer to a plane where the target screen projected by the projector is located, for example, a wall surface in the current projection scenario.

Afterwards, a world coordinate corresponding to the corner point information can be determined according to the attitude information, the distance information, and the corner point information. The world coordinate here refers to coordinate information of the corner point corresponding to the corner point information in an actual space, and a historical world coordinate corresponding to historical corner point information is determined according to the historical attitude information, the historical distance information, and the historical corner point information corresponding to the historical feature value.

After that, a point cloud corresponding to the world coordinate can be compared with a historical point cloud of a historical world coordinate corresponding to the historical corner point information, thereby determining an overlap degree between the point cloud and the historical point cloud.

Finally, it can be determined whether the overlap degree is greater than a preset overlap degree threshold. Optionally, if the overlap degree is greater than the preset overlap degree threshold, it can be determined that the feature value is the same as the historical feature value. Conversely, if the overlap degree is less than the preset overlap degree threshold, it can be determined that the feature value is not the same as the historical feature value.

Optionally, in a case where the target historical projection record is not matched, the execution subject of the example of the present disclosure can determine the target historical projection record from the second historical projection record. The second historical projection record includes a scenario identifier corresponding to the projection scenario of the projector and second coordinate information of the projection screen in the projector during the historical projection process.

How to specifically determine the target historical projection record from the second historical projection record can be described below with reference to the process shown in FIG. 6, which is not detailed here.

Optionally, in the case where the target historical projection record is not matched, the target screen can be corrected automatically or manually. Specifically, a correction rule can be determined. The correction rule refers to an automatic correction rule or a manual correction rule selected by a user, which is not limited in the examples of the present disclosure.

Afterwards, the target screen can be corrected according to the correction rule, and when it is determined that the correction of the target screen is completed, a current target projection mode of the projector and a target scenario image of the projector in the current projection scenario are determined. The target scenario image includes a target projection screen when the projector projects the corrected target screen onto the projection surface.

Based on this, a target feature value corresponding to the target scenario image can be determined, and target attitude information of the projector in the current projection scenario and target distance information from the projection surface can be acquired. Afterwards, the target projection mode, the target feature value, the target attitude information, the target distance information, and the target coordinate information of the corrected target screen in the projector can be stored in a preset first database as a first historical projection record. The first database is a database for storing the historical projection record.

Step 404: determining the first coordinate information recorded in the target historical projection record as the target projection information.

In the example of the present disclosure, when it is determined that the target historical projection record is present in the preset plurality of historical projection records, the first coordinate information recorded in the target historical projection record can be determined as the target projection information, so as to correct the target screen according to the target projection information.

In the technical solution according to the example of the present disclosure, the projection mode, the feature value, the attitude information, and the distance information are matched with the plurality of first historical projection records in the historical projection record, in which the first historical projection record includes the historical projection mode, the historical feature value, the historical attitude information, and the historical distance information of the projector, and the first coordinate information of the projection screen in the projector during the historical projection process. In a case where the first historical projection record is matched, in which the included historical projection mode is the same as the projection mode, the historical feature value is the same as the feature value, the historical attitude information is the same as the attitude information, and a difference between the historical distance information and the distance information belongs to the preset range, it is determined that the target historical projection record corresponding to the projection scenario information is present in the historical projection record, the first historical projection record is determined as the target historical projection record, and the first coordinate information recorded in the target historical projection record is determined as the target projection information. In this technical solution, the target historical projection record is determined from the plurality of first historical projection records included in the historical projection record through the feature value and the projection mode corresponding to the projection scenario, so as to determine the target projection information corresponding to the target screen to correct the target screen. Compared with correcting the screen of the projector each time the projection scenario is changed, the target screen projected by the projector can be corrected more simply and efficiently, which can correct the projection screen of the projector efficiently and simply after the projection scenario of the projector is changed, thereby efficiently and accurately projecting a screen through the projector and improving the user experience.

Referring to FIG. 6, FIG. 6 is still another example flowchart for determining target projection information according to an example of the present disclosure. On the basis of the process shown in FIG. 2 or FIG. 3, the process shown in FIG. 6 describes how to specifically determine the target historical projection record and the target projection information from the second historical projection record when it is determined that the target historical projection record is not present. As shown in FIG. 6, the process includes the following steps 601 to 604.

Step 601: when it is determined that the target historical projection record is not present, displaying a pre-stored historical projection record list including a plurality of second historical projection records, the plurality of second historical projection records including a scenario identifier of a historical projection scenario and second coordinate information of a projection screen in the projector during a historical projection process.

Step 602: receiving a trigger operation for any one of the second historical projection records in the historical projection record list.

Step 603: in response to the received trigger operation, determining the second historical projection record corresponding to the trigger operation as the target historical projection record.

The following steps 601 to 603 are described together below.

The second historical projection record refers to a record of the projector when projecting a screen in a historical period, and can include but not be limited to: a scenario identifier of a corresponding scenario during a historical projection process of the projector (for example, a scenario name input by a user) and second coordinate information of the projection screen in the projector during the historical projection process.

Since the scenario identifier is associated with the projection scenario of the projector, the projection scenario corresponding to the historical projection record can be determined by the scenario identifier.

In an example, the execution subject of the example of the present disclosure can save the second historical projection record of the projector through the process shown in FIG. 7. Referring to FIG. 7, FIG. 7 is a schematic flowchart for adding a second historical projection record according to an example of the present disclosure. As shown in FIG. 7, the process may include: when the projector is placed in a scenario, after a user completes correction of the screen and the execution subject of the example of the present disclosure detects that the screen correction is completed, a pop-up box can be output to inquire whether to intelligently memorize a screen effect in the scenario.

Optionally, in a case where a trigger operation on a button corresponding to "yes" is received, the execution subject of the example of the present disclosure outputs an input box, so that the user inputs a scenario name of a corresponding projection scenario of the projector through the input box.

Afterwards, the execution subject of the example of the present disclosure can acquire coordinate information after the screen correction, establishes an intelligently memorized scenario record (that is, the second historical projection record) including the intelligent scenario information and the coordinate information, and saves the scenario record to the historical projection record list.

Based on this, in a case where the execution subject of the example of the present disclosure determines that the target historical projection record is not present in the first historical projection record, the execution subject can output the pre-stored historical projection record list. The historical projection record list includes the plurality of second historical projection records.

Optionally, when a trigger operation by the user for any one of the second historical projection records in the historical projection record list is received, in response to the received trigger operation, the second historical projection record corresponding to the trigger operation can be determined as the target historical projection record.

Conversely, when it is determined that the target historical projection record is not present and a trigger operation for any one of the second historical projection records in the historical projection record list is not received, the target screen can be corrected automatically or manually. Specifically, a correction rule can be determined. The correction rule refers to an automatic correction rule or a manual correction rule selected by a user, which is not limited in the examples of the present disclosure.

Afterwards, the target screen is corrected according to the correction rule, and when it is determined that the correction of the target screen is completed, a pop-up box can be output to inquire whether to intelligently memorize the screen effect in the scenario.

Optionally, in a case where a trigger operation on a button corresponding to "yes" is received, the execution subject of the example of the present disclosure outputs an input box, so that the user inputs a scenario identifier (for example, scenario name) of a corresponding projection scenario of the projector through the input box.

Based on this, the execution subject of the example of the present disclosure can acquire a target scenario identifier of the current projection scenario input by the user, and store the target scenario identifier and target coordinate information of the corrected target screen in the projector as a second projection record in the historical projection record.

Step 604: determining the second coordinate information in the target historical projection record as the target projection information.

In the example of the present disclosure, after the target historical projection record is determined from the plurality of second historical projection records included in the historical projection record list, the second coordinate information recorded in the target historical projection record can be determined as the target projection information, so as to correct the target screen according to the target projection information.

In the technical solution according to the example of the present disclosure, when it is determined that the target historical projection record is not present, the pre-stored historical projection record list is displayed. The historical projection record list includes the plurality of second historical projection records, and the second historical projection record includes the scenario identifier of the historical projection scenario and the second coordinate information of the projection screen in the projector during the historical projection process. The trigger operation for any one of the second historical projection records in the historical projection record list is received. In response to the received trigger operation, the second historical projection record corresponding to the trigger operation is determined as the target historical projection record, and the second coordinate information in the target historical projection record is determined as the target projection information. In this technical solution, in a case where the historical projection record cannot be obtained through the scenario information, the historical projection record list is output, and a user manually selects a corresponding target historical projection record, so as to directly correct the target screen according to the target projection information in the target historical projection record. Compared with correcting the screen of the projector each time the projection scenario is changed, the target screen projected by the projector can be corrected more simply and efficiently, which can correct the projection screen of the projector efficiently and simply after the projection scenario of the projector is changed, thereby efficiently and accurately projecting a screen through the projector and improving the user experience.

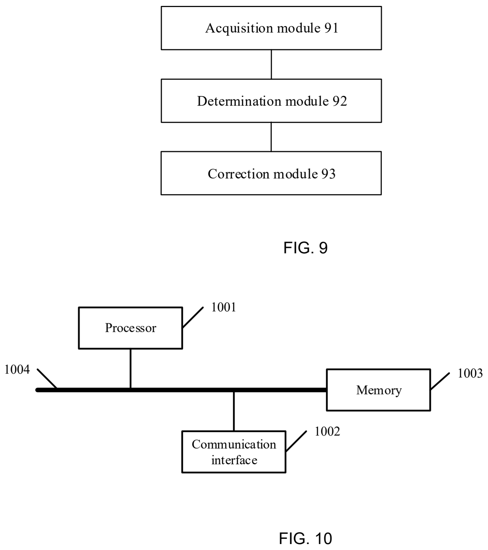

Referring to FIG. 9, FIG. 9 is an example block diagram of a screen projection device of a projector according to an example of the present disclosure. As shown in FIG. 9, the device includes:

an acquisition module 91 configured to acquire projection scenario information of the projector in a current projection scenario and acquire a preset historical projection record when the projector receives a projection instruction and projects a target screen through the projector;

a determination module 92 configured to determine target projection information matching the current projection scenario according to the acquired projection scenario information and historical projection record; and

a correction module 93 configured to correct the target screen according to the target projection information and project the corrected target screen through the projector.

As shown in FIG. 10, FIG. 10 is a structure diagram of an electronic device according to an example of the present disclosure, including a processor 1001, a communication interface 1002, a memory 1003, and a communication bus 1004, in which the processor 1001, the communication interface 1002, and the memory 1003 complete communication with each other through the communication bus 1004.

The memory 1003 is configured to store a computer program.

In an example of the present disclosure, the processor 1001 is configured to, when executing the program stored on the memory 1003, implement the screen projection method of a projector according to any one of the foregoing method examples, which includes:

when the projector receives a projection instruction and projects a target screen through the projector, acquiring projection scenario information of the projector in a current projection scenario, and acquiring a preset historical projection record;

determining target projection information matching the current projection scenario according to the acquired projection scenario information and historical projection record; and

correcting the target screen according to the target projection information, and projecting the corrected target screen through the projector.

An example of the present disclosure also provides a storage medium on which a computer program is stored. When the computer program is executed by a processor, steps of the screen projection method of a projector according to any one of the foregoing method examples are implemented.

The device examples described above are merely exemplary, where units described as separate parts may or may not be physically separate, and parts displayed as units may or may not be physical units, that is, may be located in one position or distributed on a plurality of grid units. Part or all of the modules may be selected according to actual needs to achieve the objects of the example solutions.

Through the description of the foregoing examples, a person skilled in the art may clearly understand that the examples may be implemented by software in combination with a universal hardware platform, or by hardware. Based on such understanding, the above technical solutions essentially or the part contributing to the related art may be embodied in the form of a software product. The software product may be stored in a computer readable storage medium, such as a ROM/RAM, a magnetic disk, or an optical disk. The computer readable storage medium includes several instructions for instructing a computer device (which may be a personal computer, a server, a network device, or the like) to execute the methods described in the examples or in some parts of the examples.

It should be understood that the terms used herein are only for the purpose of describing specific exemplary examples and are not intended to be limiting. Unless the context clearly indicates otherwise, the singular forms "a", "an" and "the" as used herein can also mean including plural forms. The terms "include", "contain", "comprise" and "have" are inclusive and thus indicate the presence of features, steps, operations, elements and/or components described, but do not exclude the presence or addition of one or more other features, steps, operations, elements, components, and/or combinations thereof. The method steps, procedures, and operations described herein are not interpreted as necessarily requiring them to be executed in the specific order described, unless the execution order is explicitly indicated. It should also be understood that additional or alternative steps may be used.

The foregoing is only the description of examples of the disclosure to enable a person skilled in the art to understand or implement the disclosure. Various modifications to these examples will be apparent to a person skilled in the art, and general principles defined herein may be implemented in other examples without departing from the scope of the claims. Thus, the disclosure is not limited to the examples shown herein, but conforms to the widest scope consistent with the principles and novel characteristics applied herein.

**Claims**

1. A screen projection method of a projector, comprising:

   - when the projector receives a projection instruction and projects a target screen through the projector, acquiring (101) projection scenario information of the projector in a current projection scenario, and acquiring a preset historical projection record;
   - determining (102) target projection information matching the current projection scenario according to the acquired projection scenario information and historical projection record; and
   - correcting (103) the target screen according to the target projection information, and projecting the corrected target screen through the projector.

2. The screen projection method of claim 1, wherein the historical projection record is triggered by the projector after completing projection correction of the target screen, and is generated through steps of:

   - when an instruction of saving the current projection scenario is received, acquiring the projection scenario information corresponding to the current projection scenario; and
   - when the projection scenario information corresponding to the current projection scenario is not saved in the historical projection record, acquiring projection information of the current corrected target screen in the projector, and saving the projection scenario information corresponding to the current projection scenario and the projection information into the historical projection record.

3. The screen projection method of claim 1 or 2, wherein said determining target projection information matching the current projection scenario according to the acquired projection scenario information and historical projection record comprises:

   - inquiring from the historical projection record whether a target historical projection record corresponding to the projection scenario information is present; and
   - when it is determined that the target historical projection record is present, determining historical projection information comprised in the target historical projection record as the target projection information matching the current projection scenario.

4. The screen projection method of claim 3, wherein said acquiring projection scenario information of the projector in a current projection scenario comprises:

   - determining a current projection mode of the projector, and a scenario image of the projector in the current projection scenario, the scenario image comprising a projection screen when the projector projects the target screen onto a projection surface;
   - performing image recognition on the scenario image to obtain a feature value corresponding to the scenario image; and
   - updating the projection mode and the feature value to the projection scenario information of the projector in the current projection scenario.

5. The screen projection method of claim 4, wherein the historical projection record comprises a plurality of first historical projection records, and said inquiring from the historical projection record whether a target historical projection record corresponding to the projection scenario information is present comprises:

   - matching (201) the projection mode and the feature value with the plurality of first historical projection records in the historical projection record, the first historical projection record comprising a historical projection mode and a historical feature value of the projector, and first coordinate information of a projection screen in the projector during a historical projection process;
   - in a case where the first historical projection record is matched, in which the historical projection mode is the same as the projection mode and the historical feature value is the same as the feature value, determining (202) that the target historical projection record corresponding to the projection scenario information is present in the historical projection record; and

- determining (203) the first historical projection record as the target historical projection record, and

- said determining historical projection information comprised in the target historical projection record as the target projection information matching the current projection scenario comprises:

- determining (204) the first coordinate information recorded in the target historical projection record as the target projection information.

6. The screen projection method of claim 4 or 5, wherein said updating the projection mode and the feature value to the projection scenario information of the projector in the current projection scenario comprises:

- acquiring current attitude information of the projector;
- determining distance information between the projector and the projection surface in the current projection scenario by a distance sensor in the projector; and
- updating the projection mode, the feature value, the attitude information, and the distance information to the projection scenario information corresponding to the current projection scenario of the projector.

7. The screen projection method of claim 6, wherein said inquiring from the historical projection record whether a target historical projection record corresponding to the projection scenario information is present comprises:

- matching (401) the projection mode, the feature value, the attitude information, and the distance information with a plurality of first historical projection records in the historical projection record, the first historical projection record comprising a historical projection mode, a historical feature value, historical attitude information and historical distance information of the projector, and first coordinate information of a projection screen in the projector during a historical projection process;
- in a case where the first historical projection record is matched, in which the historical projection mode is the same as the projection mode, the historical feature value is the same as the feature value, the historical attitude information is the same as the attitude information, and a difference between the historical distance information and the distance information belongs to a preset range, determining (402) that a target historical projection record corresponding to the projection scenario information is present in the historical projection record; and
- determining (403) the first historical projection record as the target historical projection record, and
- said determining historical projection information comprised in the target historical projection record as the target projection information matching the current projection scenario comprises:
- determining (404) the first coordinate information recorded in the target historical projection record as the target projection information.

8. The screen projection method of any one of claims 3 to 7, further comprising:

- when it is determined that the target historical projection record is not present, displaying (601) a pre-stored historical projection record list comprising a plurality of second historical projection records, the plurality of second historical projection records comprising a scenario identifier of a historical projection scenario and second coordinate information of a projection screen in the projector during a historical projection process;
- receiving (602) a trigger operation for any one of the second historical projection records in the historical projection record list; and
- in response to the received trigger operation, determining (603) the second historical projection record corresponding to the trigger operation as the target historical projection record, and
- said determining target projection information matching the current projection scenario comprises:
- determining (604) the second coordinate information in the target historical projection record as the target projection information,

the method preferably further comprising:

- when it is determined that the target historical projection record is not present and a trigger operation for any one of the second historical projection records in the historical projection record list is not received, determining a correction rule;
- correcting the target screen according to the correction rule;
- when it is determined that the correction of the target screen is completed, acquiring a target scenario identifier of the current projection scenario input by a user; and
- saving the target scenario identifier and target coordinate information of the corrected target screen in the projector as a second projection record in the historical projection record list.

9. The screen projection method of any one of claims 3 to 8, further comprising:

 - when it is determined that the target historical projection record is not present, determining a correction rule;
 - correcting the target screen according to the correction rule;
 - when it is determined that the correction of the target screen is completed, determining a current target projection mode of the projector and a target scenario image of the projector in the current projection scenario, the target scenario image comprising a target projection screen when the projector projects the corrected target screen onto the projection surface;
 - determining a target feature value corresponding to the target scenario image; and
 - saving the target projection mode, the target feature value, and target coordinate information of the corrected target screen in the projector as a first historical projection record in the historical projection record.

10. The screen projection method of claim 7, wherein said performing image recognition on the scenario image to obtain a feature value corresponding to the scenario image comprises:

 - extracting corner point information from the scenario image through a preset corner point detection method, the corner point information comprising coordinate information in the scenario image of the corner point in the scenario image; and
 - determining the corner point information as the feature value corresponding to the scenario image.

11. The screen projection method of claim 10, wherein whether the feature value is the same as the historical feature value is determined in the following manner:

 - determining a world coordinate corresponding to the corner point information according to the attitude information, the distance information, and the corner point information;
 - according to the historical attitude information, the historical distance information, and historical corner point information corresponding to the historical feature value, determining a historical world coordinate corresponding to the historical corner point information;
 - comparing a point cloud corresponding to the world coordinate with a historical point cloud corresponding to the historical world coordinate, thereby determining an overlap degree between the point cloud and the historical point cloud; and
 - when the overlap degree is greater than a preset overlap degree threshold, it is determined that the feature value is the same as the historical feature value; or when the overlap degree is less than a preset overlap degree threshold, it is determined that the feature value is not the same as the historical feature value,

wherein said correcting the target screen according to the target projection information preferably comprises:

 - determining a current coordinate and a historical coordinate of a same physical space coordinate point according to the world coordinate and the historical world coordinate;
 - acquiring historical distance information corresponding to the distance information in the target projection information;
 - determining a current horizontal offset and a current vertical offset of the projector according to the current coordinate, the historical coordinate, the distance information, and the historical distance information; and
 - moving the projector according to the horizontal offset and the vertical offset to correct the target screen.

12. The screen projection method of any one of the preceding claims, wherein said correcting the target screen according to the target projection information comprises:

 - determining whether there is a historical adjustment parameter corresponding to the target projection information within a preset historical period, the historical adjustment parameter referring to an adjustment parameter with which the user adjusts the projector after the projector is corrected according to the target projection information in the historical period; and
 - in a case where the historical adjustment parameter is present, correcting the target screen according to the target projection information and the historical adjustment parameter, or
 - in a case where the historical adjustment parameter is not present, correcting the target screen according to the target projection information.

13. A screen projection device of a projector, comprising:

- an acquisition module (91) configured to acquire projection scenario information of the projector in a current projection scenario and acquire a preset historical projection record when the projector receives a projection instruction and projects a target screen through the projector;
- a determination module (92) configured to determine target projection information matching the current projection scenario according to the acquired projection scenario information and historical projection record; and
- a correction module (93) configured to correct the target screen according to the target projection information and project the corrected target screen through the projector.

14. An electronic device comprising a processor (1001) and a memory (1003), wherein the processor (1001) is configured to execute a screen projection program of a projector stored in the memory (1003) to implement the screen projection method of a projector of any one of claims 1 to 12.

15. A storage medium on which one or more computer programs are stored, wherein the one or more computer programs are executed by one or more processors (1001) to implement the screen projection method of a projector of any one of claims 1 to 12.

When the projector receives a projection instruction and projects a target screen through the projector, acquire projection scenario information of the projector in a current projection scenario, and acquire a preset historical projection record — 101

Determine a target projection information matching the current projection scenario according to the acquired projection scenario information and the historical projection record — 102

Correct the target screen according to the target projection information, and project the corrected target screen through the projector — 103

FIG. 1

Match the projection mode and the feature value with the plurality of first historical projection records in the historical projection record, the first historical projection record including a historical projection mode and a historical feature value of the projector, and first coordinate information of a projection screen in the projector during a historical projection process — 201

In a case where the first historical projection record is matched, in which the historical projection mode is the same as the projection mode and the historical feature value is the same as the feature value, determine that the target historical projection record corresponding to the projection scenario information is present in the historical projection record — 202

Determine the first historical projection record as the target historical projection record — 203

Determine the first coordinate information recorded in the target historical projection record as the target projection information — 204

FIG. 2

Machine is placed in a scenario, and screen correction is completed

Intelligently memorize a screen effect in the scenario?

Intelligently memorize

Capture an image by Camera to calculate a feature value

Intelligent scenario information

Screen correction coordinate information

Optical module projection mode

Establish an intelligently memorized scenario record

Save the scenario record to database

FIG. 3

401

Match the projection mode, the feature value, the attitude information, and the distance information with a plurality of first historical projection records in the historical projection record, the first historical projection record including a historical projection mode, a historical feature value, historical attitude information and historical distance information of the projector, and first coordinate information of a projection screen in the projector during a historical projection process

402

In a case where the first historical projection record is matched, in which the historical projection mode is the same as the projection mode, the historical feature value is the same as the feature value, the historical attitude information is the same as the attitude information, and a difference between the historical distance information and the distance information belongs to a preset range, determine that a target historical projection record corresponding to the projection scenario information is present in the historical projection record

403

Determine the first historical projection record as the target historical projection record

404

Determine the first coordinate information recorded in the target historical projection record as the target projection information

FIG. 4

FIG. 5

When it is determined that the target historical projection record is not present, display a pre-stored historical projection record list including a plurality of second historical projection records, the plurality of second historical projection records including a scenario identifier of a historical projection scenario and second coordinate information of a projection screen in the projector during a historical projection process

601

Receive a trigger operation for any one of the second historical projection records in the historical projection record list

602

In response to the received trigger operation, determine the second historical projection record corresponding to the trigger operation as the target historical projection record

603

Determine the second coordinate information in the target historical projection record as the target projection information

604

FIG. 6

```
┌─────────────────────────────┐
│ A machine is placed in a     │
│ scenario, and screen         │
│ correction is completed      │
└─────────────────────────────┘
              │
              ▼
       ◇ Intelligently memorize ◇
       ◇ the screen effect in    ◇
       ◇ the scenario?           ◇
              │
              ▼
┌─────────────────────────────┐
│      Manually memorize      │
└─────────────────────────────┘
```

Current scenario name

Screen correction coordinate information

Establish an intelligently memorized scenario record

Save the scenario record to a database

FIG. 7

FIG. 8

Acquisition module 91

Determination module 92

Correction module 93

FIG. 9

1001
Processor

1004

Memory  1003

Communication interface  1002

FIG. 10

Europäisches
Patentamt
European
Patent Office
Office européen
des brevets

# EUROPEAN SEARCH REPORT

**Application Number**

EP 25 21 1869

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/062164 A1 (BASSI ZORAWAR [CA] ET AL) 13 March 2008 (2008-03-13) | 1-5,8,9, 13-15 | INV. H04N9/31 |
| Y | * figure 24 * | 6 | |
| A | * paragraph [0186] *<br>* figure 1 *<br>* paragraph [0046] - paragraph [0072] *<br>* figure 4 *<br>* paragraph [0141] - paragraph [0166] * | 7,10-12 | |
| | ----- | | |
| X | US 8 322 863 B1 (CHO SAMUEL SEUNGMIN [US] ET AL) 4 December 2012 (2012-12-04) | 1-3, 13-15 | |
| Y | * column 3, line 21 - line 63 * | 6 | |
| A | * figures 1-8 *<br>* column 8, line 46 - column 16, line 56 * | 7,10-12 | |
| | ----- | | |
| X | CN 1 347 247 A (TAIDA ELECTRONIC IND CO LTD [CN]) 1 May 2002 (2002-05-01) | 1-3, 13-15 | |
| A | * the whole document * | 4-7, 10-12 | |
| | ----- | | |
| X | US 2014/293235 A1 (AZUMA AKIHIRO [JP] ET AL) 2 October 2014 (2014-10-02) | 1-3, 13-15 | **TECHNICAL FIELDS SEARCHED (IPC)** |
| A | * paragraph [0075] - paragraph [0080] *<br>* paragraph [0101] - paragraph [0114] * | 4-7, 10-12 | H04N |
| | ----- | | |
| X | US 11 394 940 B1 (MARTIN SAMUEL EDWARD [US] ET AL) 19 July 2022 (2022-07-19) | 1-3, 13-15 | |
| A | * figures 6, 7 *<br>* column 9, line 37 - column 11, line 8 *<br>* figure 1 *<br>* column 3, line 63 - column 6, line 15 * | 4-7, 10-12 | |
| | ----- | | |

The present search report has been drawn up for all claims

| Place of search | Date of completion of the search | Examiner |
|---|---|---|
| The Hague | 2 March 2026 | Lim, Johan |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

**EP 4 738 812 A1**

## ANNEX TO THE EUROPEAN SEARCH REPORT
## ON EUROPEAN PATENT APPLICATION NO.

EP 25 21 1869

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2026

| Patent document cited in search report | | | Publication date | Patent family member(s) | | | Publication date |
|---|---|---|---|---|---|---|---|
| US 2008062164 | A1 | | 13-03-2008 | US | 2008062164 A1 | | 13-03-2008 |
| | | | | US | 2013141593 A1 | | 06-06-2013 |
| US 8322863 | B1 | | 04-12-2012 | NONE | | | |
| CN 1347247 | A | | 01-05-2002 | NONE | | | |
| US 2014293235 | A1 | | 02-10-2014 | EP | 2784571 A2 | | 01-10-2014 |
| | | | | JP | 2014197053 A | | 16-10-2014 |
| | | | | US | 2014293235 A1 | | 02-10-2014 |
| US 11394940 | B1 | | 19-07-2022 | NONE | | | |

EPO FORM P0459

For more details about this annex : see Official Journal of the European Patent Office, No. 12/82